# EUROPÄISCHE PATENTANMELDUNG

(11) **EP 4 814 059 A1**
(43) Veröffentlichungstag der Anmeldung: **30.09.2026**
(21) Anmeldenummer: 26166495.7
(22) Anmeldetag: 20.03.2026
(51) Int. Cl.: C08L 91/00, C09D 4/00, C09D 191/06, D21H 17/60

(54) **WACHSDISPERSIONEN**

(30) Priorität: 24.03.2025 EP 25165550; 01.07.2025 EP 25186667
(71) Anmelder: Peter Greven GmbH & Co. KG, 53902 Bad Münstereifel (DE)
(72) Erfinder: JUNGBLUTH, Susanne, 53881 Euskirchen (DE); HUBER, Wilhelm, 50169 Kerpen (DE); STOLZ, Hermann Josef, 53902 Bad Münstereifel (DE)
(74) Vertreter: dompatent

(57) **Zusammenfassung**

Wachsdispersion, enthaltend
• mindestens 50 Gew.-% Wasser,
• mindestens 20 Gew.-% Wachsphase, wobei
• die Wachsphase zu mindestens 90 Gew.-% Fettsäureester umfasst
• die Wachsphase einen Schmelzpunkt im Bereich 50 bis 100 °C aufweist

• mindestens 2 Gew-% Emulgatoren,
• einen Coemulgator, der eine Fettsäure, ein Fettsäuresalz oder eine Mischung davon ist,
wobei die Wachsphase in einer d50vol Korngröße von 0,1-15 µm dispergiert ist.

## Beschreibung

### TECHNISCHER BEREICH

Die vorliegende Erfindung bezieht sich auf eine Wachsdispersion, die für verschiedene industrielle Anwendungen geeignet ist und ein Verfahren zur Herstellung.

### HINTERGRUND

Es ist es üblich, Wachse in einer flüssigen, dispergierten Form zu verwenden, um ihre Anwendung in verschiedenen industriellen und kommerziellen Produkten zu erleichtern.

Sie dienen in der Beschichtungs- und Lackindustrie zur Glanzregulierung und sorgen für eine bessere Kratz- und Abriebfestigkeit der Formulierungen. Schmutz- und Wasserabweisung der Systeme werden ebenso erhöht wie der UV-Schutz.

In der Papierindustrie sorgt eine Oberflächenbehandlung mit Wachsen für eine wasserabweisende Ausstattung von Papier oder Kartonagen.

Auch in der Bauindustrie werden Wachsdispersionen zur Hydrophobierung von pastösen Systemen und Gips verwendet. Sie dienen als Mattierungsmittel für Farben.

Wachsdispersionen, als Zusatz von Beschichtungen in der Holzindustrie, führen zu einer verringerten Wasseraufnahme und reduzieren damit die Quelleigenschaften. Auch verbessern sie als Zusatz von Holzlacken die Kratzfestigkeit und Abriebfestigkeit der Oberflächen.

Wachsdispersionen sind zudem unverzichtbarer Bestandteil von Anti-Graffiti-Beschichtung.

Um diesen unterschiedlichen Anforderungen gerecht zu werde, müssen Wachsdispersionen unterschiedliche Anforderungen an Kornverteilungskurve, Schmelzpunkt und Polarität der Wachskomponente oder Komponenten erfüllen.

Es gibt Anwendungen, in denen das Wachs schmelzen soll, beispielsweise zur Hydrophobierung. Dazu sind dann kleine Korngrößen und niedrige Schmelzbereiche vorteilhaft.

Es gibt Anwendungen, in denen das Wachs nicht schmelzen soll, beispielsweise bei der Verwendung als Gleitmittel. Dazu sind dann große Korngrößen und höhere Schmelzbereiche vorteilhaft.

Die geeignete Schmelzbereiche ergeben sich aus den Temperaturen bei der Anwendung.

Bekannte Systeme umfassen typischerweise petrochemische Wachse, die aus Erdöl gewonnen werden, sowie Wachse, die aus natürlichen Quellen stammen, wie Bienenwachs und Carnaubawachs.

Petrochemische Wachse sind weit verbreitet aufgrund ihrer Verfügbarkeit und kostengünstigen Herstellung. Sie bieten jedoch oft begrenzte biologische Abbaubarkeit und können umweltbelastend sein.

CN 103694970 B1 beschreibt beispielsweise eine Paraffinemulsion, bei der Paraffin mit Hilfe zwei Emulgatoren in Wasser emulgiert wird.

Neben petrochemischen Wachsen gibt es auch Fischer-Tropsch-Wachse, die durch ein Synthesegasverfahren aus Kohlenstoffmonoxid und Wasserstoff hergestellt werden. Diese Wachse zeichnen sich durch eine hohe Reinheit und Konsistenz aus, sind jedoch in der Herstellung teurer und erfordern komplexe Produktionsanlagen.

Polyolefinwachse, die durch Polymerisation von Olefinen hergestellt werden, sind ebenfalls bekannt und bieten eine gute chemische Beständigkeit und mechanische Eigenschaften. Sie sind jedoch oft schlecht biologisch abbaubar und können in bestimmten Anwendungen eine eingeschränkte Funktionalität aufweisen.

US 4,681,910 beschreibt eine Dispersion, die ein Petroleumwachs und ein Polyethylenwachs enthält und mit Hilfe eines Tensids in Wasser dispergiert wird.

Für viele Anwendungen werden Silikon oder Siloxan Dispersionen oder Emulsionen verwendet. Diese Produkte sind aber nicht nachhaltig und zudem problematisch für das Recyceln. Ihre Persistenz in der Umwelt wird kritisch gesehen.

US 4,525,502 beschreibt ein Organopolysiloxanharz, das mit aliphatischen Carbonsäure Amin- oder Ammoniumsalzen dispergiert wird.

Es ist ein der vorliegenden Erfindung zugrunde liegendes technisches Problem, eine Wachsdispersion bereitzustellen, die die Nachteile bekannter Systeme zumindest teilweise überwindet.

### ERFINDUNG

Gegenstand der Erfindung ist u.a. eine Wachsdispersion, die mindestens 20 Gew.-% einer Wachsphase, welche Fettsäureester umfasst und einen Schmelzpunkt im Bereich von 50 bis 90 °C aufweist, umfasst. Weiterhin sind mindestens 2 Gew.-% Emulgatoren enthalten sowie ein Coemulgator, der eine verseifte oder teilverseifte Fettsäure ist. Die Wachsphase ist in einer d50vol Korngröße von 0,1-10 µm dispergiert. Die Dispersion enthält mindestens 20 Gew.-% Wasser.

Ein Hauptvorteil der beanspruchten Wachsdispersion ist die Herstellbarkeit aus nachwachsenden Rohstoffen. Anders als im Stand der Technik sind die Fettsäureester nicht als Hilfsstoffe oder Emulgatoren enthalten, sondern bilden die Hauptkomponente der Wachsphase.

### Fettsäureester

Die Wachsphase enthält Fettsäureester.

Die in der Wachsphase enthaltenen Fettsäureester bilden mindestens 90 Gew.-% der Wachsphase, bevorzugt 95 Gew.-% oder 100 Gew.-%.

In einer bevorzugten Ausführungsform umfasst die Wachsdispersion eine Auswahl von Fettsäureestern, die aus Estern von Fettsäuren mit Glykolen, Glycerin, Pentaerythrit und Fettalkoholen bestehen.

Fettsäuren im Sinne dieser Anmeldung sind Carbonsäuren mit 8 bis 32 C-Atomen, die verzweigt oder ungesättigt sein können.

Glykole umfasst dabei auch längerkettige Glykole wie z.B. Polyethylenglykole oder Polypropylenglykole.

Besonders bevorzugte Fettsäureester sind solche, die aus hydriertem Rizinusöl, Monoethylenglykoldistearat, Stearylstearat, Glycerinpartialestern und Komplexestern ausgewählt werden. Hydriertes Rizinusöl ist ein modifiziertes Rizinusöl, bei dem die ungesättigten Fettsäuren in gesättigte Fettsäuren umgewandelt wurden, wodurch es stabiler und weniger anfällig für Oxidation ist. Dies führt zu einer verbesserten Haltbarkeit und Konsistenz der Wachsdispersion.

Monoethylenglykoldistearat ist ein Ester, der aus Ethylenglykol und Stearinsäure hergestellt wird und als Emollient und Verdickungsmittel dient, wodurch die Wachsdispersion eine geschmeidigere Textur erhält.

Stearylstearat ist ein Ester von Stearinsäure und Stearylalkohol, der als Weichmacher und Konsistenzgeber fungiert, was die Anwendung der Wachsdispersion erleichtert. Glycerinpartialester sind Ester, die aus Glycerin und Fettsäuren bestehen und u.a. als Feuchtigkeitsspender wirken, wodurch die Wachsdispersion eine gleichmäßige Verteilung und eine angenehme Anwendung auf der Haut ermöglicht.

Komplexester sind Ester, die aus mehreren Komponenten bestehen und eine Vielzahl von Eigenschaften bieten, wie z.B. verbesserte Emulgierung und Stabilität der Wachsdispersion. Diese Auswahl an Fettsäureestern trägt zur Optimierung der physikalischen und chemischen Eigenschaften der Wachsphase und damit der Wachsdispersion bei, indem sie die Stabilität, Textur und Anwendungskomfort verbessert.

Bevorzugt umfasst die Wachsdispersion Fettsäureester, die aus nachwachsenden Rohstoffen stammen, also biogenen Kohlenstoff enthalten. Dies bedeutet, dass die Fettsäureester aus Quellen wie pflanzlichen Ölen oder tierischen Fetten gewonnen werden, die regelmäßig erneuert werden können und somit eine nachhaltige Alternative zu petrochemischen Rohstoffen darstellen. Der Einsatz von biogenem Kohlenstoff in der Wachsphase bringt mehrere Vorteile mit sich. Zum einen reduziert er die Abhängigkeit von fossilen Brennstoffen und trägt zur Verringerung der Treibhausgasemissionen bei, da die nachwachsenden Rohstoffe während ihres Wachstums Kohlendioxid aus der Atmosphäre absorbieren. Zum anderen fördert er die Nutzung von erneuerbaren Ressourcen, was im Einklang mit globalen Bemühungen zur Nachhaltigkeit und Umweltschutz steht.

Bevorzugt enthält die Wachsphase keine und nur einen sehr geringen Anteil (<5 Gew.-%) an Stoffen, die aus der Petrochemie stammen.

### Emulgatoren

Die erfindungsgemäße Wachsdispersion enthält mindestens 2 Gew-% Emulgatoren. Bevorzugt enthält die Wachsdispersion maximal 7 Gew-%, noch mehr bevorzugt maximal 5 Gew-% Emulgatoren.

Nach einer Ausführungsform wird die Wachsdispersion durch die Auswahl spezifischer Emulgatoren weiter verbessert, um die Stabilität und Funktionalität der Dispersion zu erhöhen.

Der Emulgator kann aus einer Vielzahl von chemischen Verbindungen ausgewählt werden, darunter anionische Emulgatoren wie Alkylsulfate, Alkylsulfonate, Phosphorsäureester und Phosphatester sowie Sulfosuccinate. Kationische Emulgatoren wie quartäre Ammoniumverbindungen und ethoxylierte Amine bieten eine weitere Möglichkeit, die Dispersion zu stabilisieren. Diese Emulgatoren sind besonders nützlich in Anwendungen, bei denen eine antimikrobielle Wirkung erwünscht ist, da sie durch ihre positive Ladung eine starke Wechselwirkung mit negativ geladenen Mikroorganismen eingehen können.

Nichtionische Emulgatoren wie ethoxylierte Fettalkohole, ethoxylierte Fettsäuren, Sorbitanester, EO/PO-Blockcopolymere, zuckerbasierte Tenside und ethoxyliertes Glycerylester bieten eine breite Palette von Optionen für die Formulierung der Wachsdispersion. Diese Emulgatoren sind besonders vorteilhaft, da sie keine elektrische Ladung tragen und somit weniger anfällig für Wechselwirkungen mit anderen geladenen Komponenten der Dispersion sind. Dies führt zu einer verbesserten Verträglichkeit und Stabilität der Dispersion in verschiedenen pH-Bereichen und unter unterschiedlichen Lagerbedingungen.

Amphotere Emulgatoren wie Betain-Derivate, Lecithine und Imidazoline-Derivate bieten eine weitere Flexibilität, da sie sowohl positive als auch negative Ladungen tragen können und somit in der Lage sind, eine breite Palette von Wechselwirkungen einzugehen. Diese Emulgatoren sind besonders nützlich in komplexen Formulierungen, in denen eine hohe Stabilität und Anpassungsfähigkeit erforderlich sind.

Durch die Kombination dieser verschiedenen Emulgatoren kann die Wachsdispersion optimal an die spezifischen Anforderungen der Anwendung angepasst werden, sei es in der Kosmetik, der Lebensmittelindustrie oder anderen Bereichen, in denen eine stabile und funktionale Wachsdispersion benötigt wird. Ein Vorteil dieser Auswahl an Emulgatoren ist die Möglichkeit, die Dispersion auf die gewünschten Eigenschaften wie Viskosität, Stabilität und Hautverträglichkeit abzustimmen. Ein weiterer Vorteil ist die Flexibilität bei der Formulierung, die es ermöglicht, die Dispersion für unterschiedliche Anwendungen zu optimieren, indem verschiedene Emulgatoren kombiniert werden, um die besten Ergebnisse zu erzielen.

Die Emulgatoren sind keine Fettsäuren. Sie sind keine Fettsäuren oder Fettsäuresalze oder Mischungen davon.

### Coemulgator

Als Coemulagatoren kommen Fettsäuren, Fettsäuresalze oder Mischungen davon zum Einsatz. Die Umsetzung von Fettsäuren mit Base zur Bildung entsprechender Salze wird auch als Verseifung bezeichnet, obwohl streng genommen Verseifung die Spaltung eines Ester betrifft. Eine verseifte Fettsäure ist im Sinne dieser Anmeldung ein Salz der Fettsäure.

Der Einsatz von Fettsäuren, Fettsäuresalze oder Mischungen davon als Coemulgatoren unterstützt die Emulgation, indem sie die Grenzflächenstabilität erhöhen und die Bildung von feinen Wachspartikeln fördern, die in der Dispersion dispergiert sind. Soweit Fettsäuren in dieser Anmeldung beschrieben werden, betrifft dies immer Fettsäuren, Fettsäuresalze oder Mischungen davon.

Nach einer Ausführungsform sind die Coemulgatoren Fettsäuren, Fettsäuresalze oder Mischungen davon, die aus C8-C32-Fettsäuren, Fettsäuresalzen oder Mischungen davon ausgewählt werden und optional Hydroxygruppen tragen.

Besonders bevorzugt sind ungesättigte Fettsäuren, Fettsäuresalze oder Mischungen davon der Kettenlänge C12 - C22 oder C12 - C20 und/oder gesättigte Fettsäuren, Fettsäuresalze oder Mischungen davon der Kettenlänge C8 - C20 oder C8 - C18. Dabei kann es sich um synthetisch erzeugte Mischungen handeln oder um Mischungen, wie sie nativ aus der Fettverseifung entstehen.

Besonders bevorzugt sind Talg-, Olein- und Palmkernölfettsäuren, Fettsäuresalze oder Mischungen davon.

Die spezifische Auswahl von Fettsäuren, Fettsäuresalze oder Mischungen davon bringt mehrere Vorteile für die Wachsdispersion mit sich. Erstens tragen gesättigte Fettsäuren zur Stabilität der Wachsdispersion bei, da sie weniger anfällig für oxidative Zersetzung sind, was die Haltbarkeit des Produkts verlängert. Die Kettenlänge der Fettsäuren bietet eine breite Palette von physikalischen Eigenschaften, die die Anpassung der Viskosität und der Textur der Dispersion ermöglichen. Dies ist besonders vorteilhaft für Anwendungen, bei denen eine bestimmte Konsistenz erforderlich ist Die optionalen Hydroxygruppen in den Fettsäuren können zusätzliche Polarität einbringen, die die Wechselwirkung mit Wasser und anderen polaren Komponenten der Dispersion verbessern.

Wenn eine Verbindung als Coemulgator oder als Emulgator eingestuft werden könnte, zählt sie als Coemulgator.

Bei den Coemulgatoren sind Ammonium- oder Aminsalze ungesättigter Fettsäuren der Kettenlänge C12 - C22 und Ammonium- oder Aminsalze gesättigter Fettsäuren der Kettenlänge C8 - C20 bevorzugt. Besonders bevorzugt sind die Ammonium- und Aminsalze von Olein und Palmkernölfettsäure.

Bevorzugt liegt die Menge an Coemulgator zwischen 1 und 5 Gew.-%.

### Korngröße und Schmelzpunkt

Die Wachsphase ist in einer d50vol Korngröße von 0,1-15 µm dispergiert, bevorzugt 0,1 bis 10 µm.

Der Begriff "d50" bezeichnet den Durchmesser, bei dem 50% des Volumens der Partikel kleiner sind als dieser Wert. Dies ist ein Maß für die mittlere Partikelgröße in einer Dispersion. Zur Bestimmung der d50vol Korngröße wird typischerweise die Laserbeugung verwendet, ein Messverfahren, bei dem die Partikelgrößenverteilung durch die Beugung eines Laserstrahls an den Partikeln ermittelt wird.

Die Wachsphase weist bevorzugt einen Schmelzpunkt im Bereich von 50 bis 100 °C auf. Noch mehr bevorzugt ist ein Schmelzpunkt im Bereich 55 bis 90 °C.

Die Kombination von Emulgatoren und Coemulgatoren in der Wachsdispersion trägt zur Stabilität und Homogenität bei, indem sie die Verteilung der Wachsphase in der Dispersion unterstützt und die Bildung von Aggregaten verhindert. Insgesamt bietet die spezifische Zusammensetzung der Fettsäureester und Fettsäuren in der Wachsdispersion eine Reihe von Vorteilen, darunter erhöhte Stabilität, verbesserte Emulgierbarkeit, optimierte thermische Eigenschaften und eine gleichmäßigere Verteilung der Wachsphase. Diese Vorteile machen die Wachsdispersion besonders geeignet für verschiedene industrielle Anwendungen, bei denen eine stabile und homogene Dispersion erforderlich ist.

Die Verwendung von Fettsäureestern aus nachwachsenden Rohstoffen verbessert die Umweltverträglichkeit der Wachsdispersion und kann auch die biologische Abbaubarkeit der Dispersion erhöhen, was zu einer geringeren Umweltbelastung führt, wenn das Produkt entsorgt wird. Darüber hinaus können nachwachsende Rohstoffe eine gleichbleibende Qualität und Verfügbarkeit gewährleisten, was die Produktionssicherheit und -stabilität erhöht.

In einer bevorzugten Ausführungsform der Wachsdispersion beträgt das Gewichtsverhältnis zwischen Coemulgator und Fettsäureestern mindestens 1:20, da dies die Wahrscheinlichkeit von Phasentrennungen oder Sedimentation verringert. Dies kann die Haltbarkeit des Produkts verlängern.

In einer Ausführungsform der Erfindung weist die Wachsdispersion ein spezifisches Gewichtsverhältnis zwischen Coemulgator und Fettsäureestern auf, das 1:8 oder weniger beträgt. Dieses Verhältnis ist von Bedeutung für die Stabilität und Effizienz der Emulsionsbildung innerhalb der Wachsdispersion und auch für die Produktionskosten relevant.

In einer Ausführungsform umfasst die Wachsdispersion Fettsäureester und Fettsäuren mit einem Verhältnis von Estergruppen zu Kohlenstoffatomen in aliphatischen Seitenketten von 1:16 oder weniger.

Hierbei zählt jede Estergruppe einmal; die C-Atome der aliphatischen Seitenketten zählen nur, wenn die aliphatischen Seitenketten mindestens 6 C-Atome haben.

Nach einer Ausführungsform weist die Wachsdispersion eine kinematische Viskosität bei 25 °C von maximal 2000 mPas auf.

Die kinematische Viskosität ist ein Maß für die Fließfähigkeit einer Flüssigkeit und wird in Millipascal-Sekunden (mPas) gemessen. Die kinematische Viskosität beeinflusst auch die Stabilität der Dispersion, da eine geeignete Viskosität dazu beiträgt, die Wachsphase gleichmäßig in der Wasserphase verteilt zu halten und ein Absetzen oder eine Entmischung zu verhindern.

Das Verfahren zur Herstellung der Wachsdispersion umfasst mehrere Schritte. Zunächst wird bevorzugt Wasser bereitgestellt, welches bereits den Emulgator und den Coemulgator enthält. Die Bereitstellung der Wachsphase erfolgt separat, wobei diese Phase Fettsäureester umfasst und einen Schmelzpunkt im Bereich von 50 bis 100 °C oder 50 bis 90 °C aufweist.

Der nächste Schritt besteht darin, die Wachsphase zu schmelzen, wodurch sie in einen flüssigen Zustand überführt wird, der für die anschließende Dispergierung im Wasser geeignet ist. Die geschmolzene Wachsphase wird dann in das Wasser dispergiert, was bedeutet, dass sie durch mechanische Einwirkung fein verteilt wird, um eine gleichmäßige Mischung zu erzielen.

Die Dispergierung sorgt dafür, dass die Wachsphase in einer d50vol Korngröße von 0,1-10 µm vorliegt, was für die Stabilität und Funktionalität der Wachsdispersion entscheidend ist. Der abschließende Schritt des Verfahrens ist die Homogenisierung der Dispersion. Dieser Schritt beinhaltet die Anwendung von mechanischen Kräften, um die Dispersion weiter zu verfeinern und sicherzustellen, dass die Wachsphase gleichmäßig und stabil in der Wasserbasis verteilt ist. Die Homogenisierung trägt dazu bei, die Korngröße der Wachsphase zu kontrollieren und die Bildung von Aggregaten zu verhindern, was die Qualität und Leistung der Wachsdispersion verbessern.

Grundsätzlich kann die d50vol Korngröße von 0,1-10 µm mit verschiedenen Verfahren gemessen werden, auch mittels mikroskopischer Untersuchung. Typischer ist die Verwendung von Laserbeugung (Laserdiffraktion), bei dem die Korngrößenverteilung durch einen Algorithmus ermittelt wird. Ein geeignetes Gerät ist beispielsweise ein Sympatec HELOS.

Durch die Kombination dieser Schritte wird eine Wachsdispersion erzeugt, die eine hohe Stabilität und gleichmäßige Verteilung der Wachsphase aufweist, was für Anwendungen in verschiedenen industriellen und kosmetischen Bereichen von Vorteil ist. Die Verwendung von Emulgatoren und Coemulgatoren in diesem Verfahren gewährleistet eine stabile Emulsion, während die präzise Kontrolle der Korngröße der Wachsphase die Funktionalität und Anwendungsfreundlichkeit der Wachsdispersion erhöht.

Nach einer Ausführungsform umfasst das Verfahren zur Herstellung der Wachsdispersion die in-situ Erzeugung des Coemulgators. Die in-situ Erzeugung des Coemulgators bedeutet, dass der Coemulgator direkt während des Herstellungsprozesses der Wachsdispersion gebildet wird, anstatt vorab hergestellt und dann hinzugefügt zu werden. Dies kann durch die Zugabe einer Base zu einer oder mehrerer Fettsäuren innerhalb des Herstellungsprozesses erfolgen.

Die in-situ Erzeugung des Coemulgators bietet mehrere Vorteile. Zum einen ermöglicht sie eine bessere Integration des Coemulgators in die Wachsdispersion, da der Coemulgator direkt in der wässrigen Phase der Dispersion gebildet wird. Dies kann zu einer verbesserten Stabilität und Homogenität der Dispersion führen, da der Coemulgator gleichmäßig verteilt ist und effektiv die Emulgation unterstützt. Zum anderen kann die in-situ Erzeugung des Coemulgators den Herstellungsprozess vereinfachen und effizienter gestalten, da ein zusätzlicher Schritt zur Herstellung und Zugabe des Coemulgators entfällt. Dies kann die Produktionskosten senken und die Herstellung der Wachsdispersion beschleunigen. Darüber hinaus kann die in-situ Erzeugung des Coemulgators die Flexibilität des Herstellungsprozesses erhöhen, da die Menge und Art des Coemulgators direkt während der Produktion angepasst werden können, um spezifische Anforderungen oder Eigenschaften der Wachsdispersion zu erfüllen. Die Verwendung eines entsprechenden Coemulgators kann auch die Umweltfreundlichkeit des Herstellungsprozesses verbessern, da natürliche Fettsäuren verwendet werden können und die 'Verseifung' eine relativ umweltfreundliche chemische Reaktion ist. Insgesamt bietet das Verfahren zur Herstellung der Wachsdispersion durch in-situ Erzeugung des Coemulgators eine verbesserte Produktqualität, eine effizientere und kostengünstigere Produktion sowie eine erhöhte Flexibilität und Umweltfreundlichkeit.

Die Wachsdispersion kann in verschiedenen industriellen und kommerziellen Anwendungen eingesetzt werden, darunter Beschichtungen, Schmiermittel, Kosmetika, die Papierherstellung und Gipsbaustoffe. Diese breite Palette von Anwendungen verdeutlicht die Vielseitigkeit und Anpassungsfähigkeit der Wachsdispersion.

Die Dispersion enthält eine erhebliche Menge an Wasser, was ihre Verarbeitung und Handhabung erleichtert.

### BEISPIELE

### Beispiel 1

| **Bezeichnung** | **Anteil (%)** |
|---|---|
| dest. Wasser | 68,5 |
| Ammoniak 25% | 0,5 |
| Sorbitan Monooleate (Emulgator) | 4 |
| Hydr. Rizinusöl (Wachsphase) | 25 |
| Oleinsäure (Coemulgator) | 1 |
| Natriumdodecylbenzolsulfonat (Emulgator) | 1 |
| | **100** |

| **Parameter** | **Messwert** | **Einheit** |
|---|---|---|
| durch. Teilchengröße D50 (d50_{VOL}) | 6,6 | µm |
| durch. Teilchengröße D90 (d90_{VOL}) | 47,3 | µm |
| Feststoff | 32,8 | % |
| Viskosität | 168 | mPas |
| Schmelzpunkt der Wachskomponente | 85 | °C |

Durch den Ammoniak werden in-situ Fettsäuresalze gebildet.

### Beispiel 2

| **Bezeichnung** | **Anteil (%)** |
|---|---|
| dest. Wasser | 60,8 |
| Ammoniak 25% | 0,5 |
| Monoethylglycol-Distreat (Wachsphase) | 34 |
| Oleinsäure (Coemulgator) | 2,5 |
| Polyoxyethylene(20) -Sorbitan-Monostearat (Emulgator) | 2 |
| Marlon A 365 IC (Emulgator) | 0,2 |
| | **100** |

| **Parameter** | **Messwert** | **Einhein** |
|---|---|---|
| durch. Teilchengröße D50 (d50_{VOL}) | 4 | µm |
| durch. Teilchengröße D90 (d90_{VOL}) | 8,7 | µm |
| Feststoff | 52 | % |
| Viskosität | 197 | mPas |
| Schmelzpunkt der Wachskomponente | 67 | °C |

### Beispiel 3

| | |
|---|---|
| **Bezeichnung** | **Anteil (%)** |
| dest. Wasser | 58 |
| Ammoniak 25% | 0,5 |
| Stearyl-Stearat (Wachsphase) | 35 |
| Fettsäuren C8 - C18 (Coemulgator) | 2,5 |
| Polyoxyethylene-25 -Cetyl Stearyl Alcohol (Emulgator) | 4 |
| | **100** |

| **Parameter** | **Messwert** | **Einheit** |
|---|---|---|
| durch. Teilchengröße D50 (d50_{VOL}) | 6 | µm |
| durch. Teilchengröße D90(d90_{VOL}) | 12,9 | µm |
| Feststoff | 40,8 | % |
| Viskosität | 255 | mPas |
| Schmelzpunkt der Wachskomponente | 56 | °C |

### Beispiel 4 (nicht erfindungsgemäß)

| **Bezeichnung** | **Anteil (%)** |
|---|---|
| dest. Wasser | 74,4 |
| Ammoniak 25% | 0,5 |
| Monoethylglycol-Distearat (Wachsphase) | 20,1 |
| Polyethylenglykol Sorbitanmonostearat (Emulgator) | 4 |
| Natriumdodecylbenzolsulfonat (Emulgator) | 1 |
| | 100 |

| **Parameter** | **Messwert** | **Einheit** |
|---|---|---|
| Viskosität | Schon bei der Herstellung fest | |
| Schmelzpunkt der Wachskomponente | 67 | °C |
| Feststoff | ca. 30 | % |

## Patentansprüche

1. Wachsdispersion, enthaltend
• mindestens 50 Gew.-% Wasser,
• mindestens 20 Gew.-% Wachsphase, wobei
• die Wachsphase zu mindestens 90 Gew.-% Fettsäureester umfasst,
• die Wachsphase einen Schmelzpunkt im Bereich 50 bis 100 °C aufweist,
• mindestens 2 Gew-% Emulgatoren,
• einen Coemulgator, der eine Fettsäure, ein Fettsäuresalz oder eine Mischung davon ist,
wobei die Wachsphase in einer d50vol Korngröße von 0,1-15 µm dispergiert ist.

2. Wachsdispersion nach Anspruch 1, wobei die Fettsäureester und Fettsäuren ein Verhältnis von Estergruppen zu C-Atomen in aliphatischen Seitenketten von 1:16 oder weniger aufweisen.

3. Wachsdispersion nach einem der vorherigen Ansprüche, wobei die Fettsäureester ausgewählt werden aus Estern von Fettsäuren mit
• Glykolen
• Glycerin
• Pentaerythrit
• Fettalkohole.

4. Wachsdispersion nach einem der vorherigen Ansprüche, wobei die Fettsäureester ausgewählt werden aus hydriertem Rizinusöl, Monoethylenglykoldistearat, Stearylstearat, Glycerinpartialestern und Komplexestern.

5. Wachsdispersion nach einem der vorherigen Ansprüche, wobei die Fettsäureester aus nachwachsenden Rohstoffen stammen.

6. Wachsdispersion nach einem der vorherigen Ansprüche, wobei die Fettsäuren ausgewählt werden aus C8-C32-Fettsäuren, die optional Hydroxygruppen tragen.

7. Wachsdispersion nach einem der vorherigen Ansprüche, wobei das Gewichtsverhältnis zwischen Coemulgator und Fettsäureestern mindestens 1:20 beträgt.

8. Wachsdispersion nach einem der vorherigen Ansprüche, wobei das Gewichtsverhältnis zwischen Coemulgator und Fettsäureestern 1:8 oder weniger beträgt.

9. Wachsdispersion nach einem der vorherigen Ansprüche, wobei die Fettsäure als Ammoniumsalz, als Aminsalz oder als Mischung davon vorliegt.

10. Wachsdispersion nach einem der vorherigen Ansprüche, wobei der Emulgator ausgewählt wird aus
• anionischen Emulgatoren
• Alkylsulfate und Alkylsulfonate
• Phosphorsäureester und Phosphatester
• Sulfosuccinate
• kationischen Emulgatoren
• Quartäre Ammoniumverbindungen
• Ethoxylierte Amine
• nichtionischen Emulgatoren
• Ethoxylierte Fettalkohole,
• Ethoxylierte Fettsäuren
• Sorbitanester
• EO/PO-Blockcopolymere
• Zuckerbasierte Tenside,
• Ethoxyliertes Glycerylester
• amphotere Emulgatoren
• Betain-Derivate
• Lecithine
• Imidazoline-Derivate
und Kombinationen davon.

11. Wachsdispersion nach einem der vorherigen Ansprüche, wobei die Menge an Emulgator maximal 7 Gew.-% beträgt.

12. Wachsdispersion nach einem der vorherigen Ansprüche, wobei die Dispersion eine kinematische Viskosität bei 25 °C von maximal 2000 mPas aufweist.

13. Verfahren zur Herstellung der Wachsdispersion nach einem der Ansprüche 1 bis 12 umfassend die Schritte:
• Bereitstellen von Wasser mit Emulgator und Coemulgator
• Bereitstellen der Wachsphase
• Schmelzen der Wachsphase
• Dispergieren der geschmolzenen Wachsphase im Wasser
• Homogenisieren der Dispersion.

14. Verfahren zur Herstellung der Wachsdispersion nach Anspruch 13, wobei der Coemulgator in-situ erzeugt wird.

15. Verwendung der Wachsdispersion nach einem der Ansprüche 1 bis 12 in Beschichtungen, Schmiermitteln, Kosmetika, der Papierherstellung oder in Gipsbaustoffen.
